# FASCICULE DE BREVET EUROPEEN

(11) **EP 1 234 697 B1**
(45) Date de publication et mention de la délivrance du brevet: **19.04.2006**
(21) Numéro de dépôt: 02290363.7
(22) Date de dépôt: 14.02.2002
(51) Int. Cl.: B60H 1/03, B60H 1/00

(54) **Procédé et dispositif de chauffage d'un habitacle d'un véhicule équipé d'une pile à combustible**
Verfahren und Vorrichtung zum Beheizen von einem Innenraum eines Fahrzeuges ausgerüstet mit einer Brennstoffzellenanlage
Process and apparatus for heating a passenger compartment of a vehicle equiped with a fuel cell

(30) Priorité: 23.02.2001 FR 0102450
(43) Date de publication de la demande: 28.08.2002
(73) Titulaire: Renault s.a.s., 92100 Boulogne Billancourt (FR)
(72) Inventeur: Dewaele, Gilles, 92500 Rueil Malmaison (FR); Keretli, Fahri, 78320 Le Mesnil Saint Denis (FR); Samuel, Sébastien, 78000 Versailles (FR)

(56) Documents cités:
- EP-A- 0 972 668
- EP-A- 0 992 377
- EP-A- 0 999 078
- WO-A-98/56058
- DE-A- 19 924 938

## Description

L'invention concerne un procédé de chauffage de l'habitacle d'un véhicule automobile propulsé au moyen d'énergie électrique produite par une pile à combustible produisant en outre de l'énergie calorifique qui, par l'intermédiaire d'un fluide caloporteur est sélectivement soit évacuée vers l'extérieur du véhicule par l'intermédiaire d'un radiateur, soit utilisée pour chauffer ledit habitacle par l'intermédiaire d'un aérotherme, ladite pile à combustible étant pourvue d'au moins un accessoire qui lui est nécessaire pour fonctionner et qui produit des gaz chauds.

On connaît, par exemple selon le document JP 6 260 196, un procédé consistant à chauffer l'habitacle d'un véhicule automobile par introduction dans cet habitacle d'air extérieur et réchauffé en passant par un aérotherme branché sur le circuit de refroidissement de la pile à combustible et chauffé par l'énergie calorifique produite par cette dernière. Document EP 0 999 078 montre l'état de la technique tel que décrite dans le préambule de la revendication une.

Cependant, dans certaines circonstances d'utilisation du véhicule, la puissance calorifique délivrée par la pile à combustible ne peut couvrir les besoins calorifiques de l'habitacle.

En effet, le rendement d'un système de propulsion à pile à combustible est globalement supérieur à celui d'un véhicule dit thermique, c'est-à-dire équipé d'un moteur thermique. Le rendement représente le rapport entre la puissance transmise aux roues du véhicule et la puissance mise à disposition du système de propulsion. A une puissance transmise aux roues identique, la puissance à produire, et donc la puissance calorifique associée à cette production, est ainsi plus faible pour un véhicule électrique équipé d'une pile à combustible que pour un véhicule thermique.

Dans le cas d'un véhicule équipé d'une pile à combustible, la puissance calorifique transmise à l'air de chauffage peut ainsi s'avérer insuffisante pour couvrir les besoins calorifiques de l'habitacle, par exemple si le véhicule roule lentement ou s'arrête fréquemment (feux rouges, embouteillages, etc.). Dans cette dernière situation, si le moteur d'un véhicule thermique continue à tourner et à produire une quantité importante d'énergie calorifique durant les arrêts du véhicule, il n'en est pas de même pour une pile à combustible dont on peut interrompre le fonctionnement. La durée et la fréquence des arrêts peuvent être telles que l'énergie calorifique délivrée par la pile à combustible ne suffise plus à satisfaire les besoins calorifiques de l'habitacle.

Le déficit d'énergie calorifique peut être comblé par des solutions classiques comme l'implantation de résistances électriques chauffant le fluide caloporteur circulant dans le circuit de refroidissement avant son passage à travers l'aérotherme. Ces solutions augmentent cependant sensiblement la consommation du véhicule.

Le but de la présente invention est de fournir un procédé de chauffage de l'habitacle d'un véhicule équipé d'une pile à combustible qui, quand l'énergie calorifique délivrée par la pile à combustible ne suffit pas à couvrir les besoins calorifiques de l'habitacle, n'augmente pas la consommation du véhicule.

On atteint ce but au moyen d'un procédé de chauffage tel que défini en introduction qui est caractérisé en ce qu'il consiste à prélever sélectivement de l'énergie calorifique sur lesdits gaz chauds pour la transférer audit fluide caloporteur.

Selon d'autres caractéristiques du procédé de la présente invention,
- on prélève sélectivement de l'énergie calorifique sur lesdits gaz chauds pour la transférer audit fluide caloporteur dans le cas où la température d'entrée dans ledit aérotherme dudit fluide caloporteur est inférieure à une température de seuil,
- quand la température d'entrée dans ledit aérotherme dudit fluide caloporteur est supérieure à ladite température de seuil, on supprime toute relation de transfert thermique entre ledit fluide caloporteur et lesdits gaz chauds,
- le procédé consiste à faire varier ladite température de seuil afin de faire varier la vitesse de variation de la température dudit habitacle,
- le procédé consiste, le cas échéant, à interrompre le prélèvement de ladite énergie calorifique par détournement du flux dudit fluide caloporteur du flux desdits gaz chauds,
- ledit accessoire est un brûleur destiné à maintenir la température d'un reformeur, fabriquant un combustible pour ladite pile à combustible, dans une plage de fonctionnement optimale dudit reformeur,
- le procédé consiste, le cas échéant, à interrompre le prélèvement de ladite énergie calorifique par détournement du flux desdits gaz chauds du flux dudit fluide caloporteur,
- ledit accessoire est un reformeur fabriquant un combustible pour ladite pile à combustible et/ou un compresseur comprimant de l'air servant de comburant à ladite pile à combustible,
- ledit procédé consiste à prélever sélectivement de l'énergie calorifique sur lesdits gaz chauds pour la transférer audit fluide caloporteur dans le cas où l'énergie calorifique fournie par ladite pile à combustible est insuffisante pour chauffer ledit habitacle à la température souhaitée.
   La présente invention concerne également un dispositif de chauffage de l'habitacle d'un véhicule automobile propulsé au moyen d'énergie électrique produite par une pile à combustible produisant en outre de l'énergie calorifique qui, par l'intermédiaire d'un fluide caloporteur amené à circuler dans un circuit de refroidissement de ladite pile à combustible, est sélectivement soit évacuée vers l'extérieur du véhicule par l'intermédiaire d'un radiateur, soit utilisée pour chauffer ledit habitacle par l'intermédiaire d'un aérotherme, ladite pile à combustible étant pourvue d'au moins un accessoire qui lui est nécessaire pour fonctionner et qui produit des gaz chauds.
   Le circuit de refroidissement comporte au moins un échangeur en relation de transfert thermique avec au moins un desdits accessoires et des moyens pour régler les débits desdits gaz chauds et/ou dudit fluide caloporteur à travers ledit échangeur.
   Ce dispositif est remarquable en ce que lesdits moyens pour régler le débit desdits gaz chauds à travers ledit échangeur comprennent une branche de dérivation desdits gaz chauds contournant ledit échangeur et des moyens de répartition du débit desdits gaz chauds entre ladite branche de dérivation et ledit échangeur.
   Selon d'autres caractéristiques de ce dispositif, lesdits moyens de répartition du débit desdits gaz chauds entre ladite branche de dérivation et ledit échangeur comprennent une vanne à trois voies connectée à une jonction entre ladite branche de dérivation et une branche du circuit desdits gaz chauds dans laquelle est inséré ledit échangeur,
- ledit accessoire est un reformeur fabriquant un combustible pour ladite pile à combustible et/ou un compresseur comprimant de l'air servant de comburant à ladite pile à combustible,
- lesdits moyens pour régler le débit dudit fluide caloporteur à travers ledit échangeur comprennent une branche de dérivation dudit fluide caloporteur contournant ledit échangeur et des moyens de répartition du débit dudit fluide caloporteur entre ladite branche de dérivation et ledit échangeur,
- lesdits moyens de répartition du débit dudit fluide caloporteur entre ladite branche de dérivation et ledit échangeur comprennent une vanne à trois voies connectée à une jonction entre ladite branche de dérivation et une branche dudit circuit de refroidissement dans laquelle est inséré ledit échangeur,
- ledit accessoire est un brûleur destiné à maintenir la température d'un reformeur dans une plage de fonctionnement optimale dudit reformeur,
- ladite vanne à trois voies est réglable en continu.

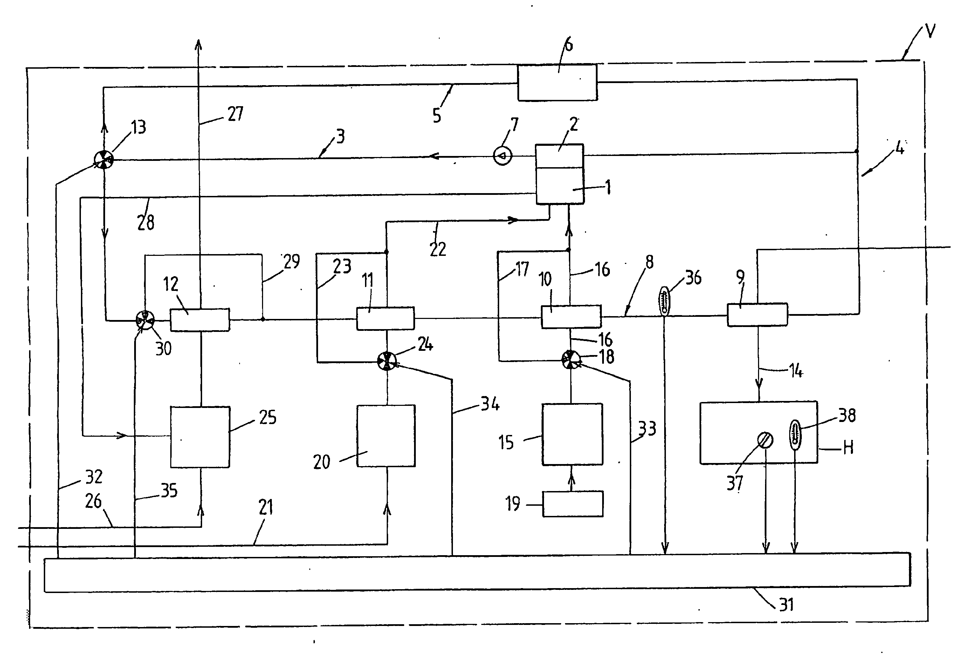

D'autres caractéristiques et avantages de la présente invention apparaîtront à la lecture de la description qui va suivre et à l'examen du dessin annexé sur lequel la figure unique représente un schéma de principe d'un dispositif pour la mise en oeuvre du procédé dans le mode de réalisation préféré de la présente invention.

Une pile à combustible 1 est montée à bord d'un véhicule V. Cette pile est associée à un échangeur thermique 2 qui est connecté dans une première branche 3 d'un circuit de refroidissement désigné globalement par la référence 4 et dans lequel circule un fluide caloporteur. La branche 3 du circuit de refroidissement 4 est connectée en parallèle à une deuxième branche 5 dans laquelle est connecté un radiateur 6 agencé pour céder de l'énergie du fluide caloporteur vers l'extérieur du véhicule. Une pompe de circulation 7 est prévue dans la première branche 3.

Le circuit de refroidissement 4 comprend également une troisième branche 8 dans laquelle sont connectés en série un aérotherme 9 et trois échangeurs thermiques 10, 11 et 12.

Les trois branches 3, 5 et 8 du circuit de refroidissement aboutissent toutes trois à une vanne à trois voies 13 à l'aide de laquelle il est possible de réguler le débit du fluide caloporteur qui y circule.

L'aérotherme 9 est traversé par de l'air venant de l'extérieur du véhicule qui est injecté dans l'habitacle de celui-ci, symbolisé par le rectangle H. Cette circulation est repérée par la référence 14.

Les échangeurs 10, 11 et 12 sont associés à trois accessoires de la pile à combustible 1. Ces accessoires sont nécessaires au fonctionnement de cette dernière et ils ont en commun de produire des gaz chauds. Ainsi le premier accessoire est un reformeur 15 destiné à produire le carburant de la pile 1. Ce dernier circule dans un circuit d'alimentation en gaz carburant 16 traversant l'échangeur 10. Le circuit d'alimentation 16 est pourvu d'une dérivation 17 contournant l'échangeur 10 et connectée à une vanne à trois voies 18 située entre le reformeur 15 et l'échangeur 10. Le reformeur 15 est alimenté par un réservoir 19 d'un carburant, du méthane ou de l'essence par exemple si le gaz carburant de la pile 1 est de l'hydrogène.

Le deuxième accessoire est un compresseur 20 destiné à comprimer l'air extérieur qui lui parvient par une canalisation 21. La sortie du compresseur 20 est connectée à un circuit d'alimentation en air comprimé 22 traversant l'échangeur 11 et menant à la pile 1. Ce circuit d'alimentation 22 peut présenter une dérivation 23 contournant l'échangeur 11 et branchée à une vanne à trois voies 24 insérée entre le compresseur 20 et l'échangeur 11.

Le troisième accessoire de la pile 1 est un brûleur 25 qui est associé au reformeur 15 pour le porter à la température de production du gaz carburant de la pile 1. Ce brûleur prélève de l'air extérieur par une canalisation 26 et rejette des gaz brûlés vers l'extérieur via une canalisation 27 en passant dans l'échangeur 12. Il reçoit du carburant de la pile 1 à savoir le gaz carburant résiduel que cette dernière ne consomme pas et qui lui parvient par l'intermédiaire d'une canalisation 28.

Sur la troisième branche 8 du circuit de refroidissement est placée une dérivation 29 contournant l'échangeur 12 et branchée à une vanne à trois voies 30 insérée dans cette troisième branche 8.

Il est prévu également une unité de commande électronique 31 chargée de gérer le fonctionnement du dispositif qui vient d'être décrit. Cette unité est connectée aux vannes 13, 18, 24 et 30 par l'intermédiaire de lignes électriques respectives 32 à 35. Elle est également reliée à un capteur de température 36 prévu, à l'entrée de l'aérotherme 9, dans la troisième branche 8 du circuit de refroidissement 4, à un organe de réglage 37 prévu dans l'habitacle H et destiné à la fixation d'une température de consigne à laquelle l'habitacle doit être chauffé et à un capteur de température 38 placé dans ce dernier pour fournir la valeur de température réelle qui y règne.

Dans la description de l'exemple préféré de réalisation de l'invention, il est supposé que trois accessoires de la pile 1 producteurs d'énergie calorifique peuvent au besoin participer en supplément à l'échauffement de l'habitacle H, une possibilité de sélection étant prévue par l'intermédiaire des dérivations 17, 23 et 29 et les vannes à trois voies associées 18, 24 et 30. Cependant dans des variantes plus simples de l'invention, on pourrait n'exploiter l'énergie calorifique en excès que d'un seul ou de deux accessoires de la pile. Par ailleurs, si d'autres accessoires que ceux décrits produisaient de l'énergie calorifique en excès, celle-ci pourrait également être mise à profit en supplément.

Selon une autre variante de l'invention, les échangeurs 10, 11 et 12 pourraient également, au lieu d'être connectés en série dans une seule branche du circuit de refroidissement être montés chacun dans une branche parallèle aux branches 3 et 5.

Le fonctionnement du dispositif de gestion thermique qui vient d'être décrit est le suivant.

Tous les accessoires produisant des gaz chauds, l'invention consiste à mettre à profit la production en excès d'énergie calorifique contenue dans ces gaz chauds pour, au besoin, la transférer dans l'aérotherme 9 chargé de chauffer l'habitacle H. Un tel besoin existe si la pile à combustible 1 elle-même n'est pas à même de fournir cette énergie calorifique.

Ainsi, par exemple, le reformeur 15 produit de l'hydrogène (appelé ici gaz chaud) à une température relativement élevée qui peut être de 300°C si le reformeur 15 consomme du méthanol et de 800°C s'il s'agit d'essence. La température de fonctionnement de la pile 1 étant de 80°C, on comprend que, lorsque celle-ci fonctionne, on dispose d'une certaine quantité d'énergie en excès.

De même, la compression de l'air dans le compresseur 20 fournit à l'air comprimé (un autre gaz chaud) une énergie calorifique qui n'est pas indispensable à la pile 1.

Par ailleurs, le brûleur 25 produit des gaz brûlés à haute température dont une certaine quantité d'énergie calorifique n'est pas consommée par le reformeur 15.

Dès lors, en faisant passer ces gaz chauds dans les échangeurs respectifs 10, 11 et 12, moyennant une régulation appropriée réalisée par l'unité de commande électronique 31, on conçoit qu'il est possible d'exploiter l'énergie calorifique contenue dans ces gaz chauds pour la transférer au fluide caloporteur. Pour ce faire, l'unité de commande 31 peut agir sur les vannes 13, 18, 24 et 30 en fonction des données qui lui sont fournies par les capteurs 36 et 38 et par l'organe de réglage 37. A cet effet, les vannes 13, 18, 24 et 30 sont de préférence dotées d'une possibilité de réglage continu du débit de fluide qui les traverse, encore que l'utilisation de vannes de réglage par tout rien soit également envisageable. D'ailleurs, il est également possible de remplacer ces vannes à trois voies par des vannes simples connectées dans chacun des conduits concernés.

On va maintenant décrire le procédé de chauffage de l'invention qui est exécuté à l'aide du dispositif de gestion thermique représenté sur le dessin.

L'unité de commande électronique 31 détermine si l'habitacle H a besoin d'être chauffé. Un besoin calorifique dans l'habitacle H peut s'exprimer par une différence entre la température de consigne fixée par un utilisateur au moyen de l'organe de réglage 37 et la température réelle mesurée par le capteur 38.

En cas de besoin calorifique, l'unité de commande électronique 31 détermine si la puissance calorifique Pₚᵢₗₑ mise à disposition pour l'habitacle H par la pile à combustible 1 suffit pour le couvrir.

Dans le mode de réalisation préféré de l'invention, cette détermination s'effectue par comparaison de la température T_{entrée} du fluide caloporteur à l'entrée de l'aérotherme 9 mesurée par le capteur 36 avec une température de seuil Tₛₑᵤᵢₗ, définie comme égale à la température minimale du fluide caloporteur devant régner à l'entrée de l'aérotherme 9 pour fournir à l'habitacle H une puissance calorifique Pₛₑᵤᵢₗ, le débit du fluide caloporteur à travers l'aérotherme 9 étant supposé maximal et donc celui à travers le radiateur 6 étant supposé nul. La puissance calorifique Pₛₑᵤᵢₗ est déterminée de manière à dépasser les pertes calorifiques de l'habitacle H pour que la température de ce dernier puisse augmenter.

Si la température T_{entrée} dépasse la température Tₛₑᵤᵢₗ, l'unité de -commande électronique 31 actionne la vanne 13 de manière à faire passer tout le débit du fluide caloporteur à travers l'aérotherme 9, ce qui rend maximale la vitesse de chauffage de l'habitacle H.

Cette situation est celle, par exemple, d'un véhicule V roulant au-delà d'une certaine vitesse. Dans ce cas, la puissance calorifique fournie en excès par les accessoires 15, 20 et 25 n'est pas nécessaire pour chauffer l'habitacle H. L'unité de commande 31 rend donc inactifs leurs échangeurs 10, 11 et 12 en commandant les vannes 18, 24 et 30 de manière à dériver tout le fluide qui les traverse par les dérivations respectives 17, 23 et 29.

Dans le cas de l'échangeur 10 ou de l'échangeur 11, le flux des gaz chauds est détourné du flux du fluide caloporteur qui continue à traverser l'échangeur.

Dans le cas de l'échangeur 12, c'est le flux du fluide caloporteur qui est détourné du flux des gaz chauds qui continuent à traverser l'échangeur.

Dans un autre mode de réalisation de l'invention, le dispositif permet, pour un même échangeur, de dériver le flux des gaz chauds et/ou le flux du fluide caloporteur de l'échangeur.

L'unité de commande 31 peut également limiter le débit à travers l'aérotherme 9 au moyen de la vanne 13 de manière à ne pas transférer à l'air de chauffage plus de puissance calorifique qu'une puissance déterminée, par exemple que la puissance de seuil, Pₛₑᵤᵢₗ.

Mais, elle peut également faire en sorte que les échangeurs 10, 11 et 12 soient maintenus actifs à un faible débit.

Si la température T_{entrée} est inférieure à la température Tₛₑᵤᵢₗ, l'unité de commande 31 active au moins l'un des échangeurs 10, 11 ou 12 par la ou les vannes correspondantes 18, 24 ou 30 de manière à envoyer au moins une partie du fluide qui la ou les traverse dans l'échangeur correspondant. On augmente ainsi la quantité de calories traversant l'aérotherme 9 et transférée à l'habitacle H.

Dans ce cas, la puissance calorifique reçue par le fluide caloporteur à travers le ou les échangeurs 10, 11 et 12 augmente la température T_{entrée}, jusqu'à la température Tₛₑᵤᵢₗ

Cette situation est celle, par exemple, d'un véhicule V dans un embouteillage.

Dans un autre mode de réalisation de la présente invention, la température de seuil, Tₛₑᵤᵢₗ, correspondant à une vitesse de variation de la température de l'habitacle H, est variable. L'unité de commande électronique 31 règle, par exemple en fonction d'une vitesse de variation qui lui est assignée, par exemple par un utilisateur du véhicule V, la température de seuil, Tₛₑᵤᵢₗ.

Comme cela apparaît clairement à présent, le procédé selon la présente invention permet de chauffer l'habitacle H sans augmenter la consommation du véhicule V, notamment quand la puissance calorifique délivrée par la pile à combustible 1 ne suffit pas à couvrir les besoins calorifiques de l'habitacle H.

## Revendications

1. Procédé de chauffage de l'habitacle (H) d'un véhicule (V) automobile propulsé au moyen d'énergie électrique produite par une pile à combustible (1) produisant en outre de l'énergie calorifique qui, par l'intermédiaire d'un fluide caloporteur est sélectivement soit évacuée vers l'extérieur du véhicule (V) par l'intermédiaire d'un radiateur (6), soit utilisée pour chauffer ledit habitacle (H) par l'intermédiaire d'un aérotherme (9), ladite pile à combustible (1) étant pourvue d'au moins un accessoire (15,20,25) qui lui est nécessaire pour fonctionner et qui produit des gaz chauds, ledit procédé consistant à prélever sélectivement de l'énergie calorifique sur lesdits gaz chauds pour la transférer audit fluide caloporteur, notamment dans le cas où l'énergie calorifique fournie par ladite pile à combustible (1) est insuffisante pour chauffer ledit habitacle (H) à la température souhaitée,
**caractérisé en ce qu'**on prélève sélectivement de l'énergie calorifique sur lesdits gaz chauds pour la transférer audit fluide caloporteur dans le cas où la température d'entrée (T_{entrée}) dans ledit aérotherme (9) dudit fluide caloporteur est inférieure à une température de seuil (Tₛₑᵤᵢₗ).

2. Procédé selon la revendication 1, **caractérisé en ce que**, quand la température d'entrée (T_{entrée}) dans ledit aérotherme (9) dudit fluide caloporteur est supérieure à ladite température de seuil (Tₛₑᵤᵢₗ), on supprime toute relation de transfert thermique entre ledit fluide caloporteur et lesdits gaz chauds.

3. Procédé selon l'une quelconque des revendications 1 et 2, **caractérisé en ce qu'**il consiste à faire varier ladite température de seuil (Tₛₑᵤᵢₗ) afin de faire varier la vitesse de variation de la température dudit habitacle (H).

4. Procédé selon l'une quelconque des revendications précédentes, **caractérisé en ce qu'**il consiste, le cas échéant, à interrompre le prélèvement de ladite énergie calorifique par détournement du flux dudit fluide caloporteur du flux desdits gaz chauds.

5. Procédé selon la revendication 4, **caractérisé en ce que** ledit accessoire est un brûleur (25) destiné à maintenir la température d'un reformeur (15), fabriquant un combustible pour ladite pile à combustible (1), dans une plage de fonctionnement optimale dudit reformeur (15).

6. Procédé selon l'une quelconque des revendications précédentes, **caractérisé en ce qu'**il consiste, le cas échéant, à interrompre le prélèvement de ladite énergie calorifique par détournement du flux desdits gaz chauds du flux dudit fluide caloporteur.

7. Procédé selon la revendication 6, **caractérisé en ce que** ledit accessoire est un reformeur (15) fabriquant un combustible pour ladite pile à combustible (1) et/ou un compresseur (20) comprimant de l'air servant de comburant à ladite pile à combustible (1).

8. Dispositif de chauffage de l'habitacle (H) d'un véhicule (V) automobile propulsé au moyen d'énergie électrique produite par une pile à combustible (1) produisant en outre de l'énergie calorifique qui, par l'intermédiaire d'un fluide caloporteur amené à circuler dans un circuit de refroidissement (4) de ladite pile à combustible (1), est sélectivement soit évacuée vers l'extérieur du véhicule (V) par l'intermédiaire d'un radiateur (6), soit utilisée pour chauffer ledit habitacle (H) par l'intermédiaire d'un aérotherme (9), ladite pile à combustible (1) étant pourvue d'au moins un accessoire (15,20,25) qui lui est nécessaire pour fonctionner et qui produit des gaz chauds, ledit circuit de refroidissement (4) comporte au moins un échangeur (10,11,12) en relation de transfert thermique avec au moins un desdits accessoires (15,20,25) et des moyens (18,24,30,17,23,29) pour régler les débits desdits gaz chauds et/ou dudit fluide caloporteur à travers ledit échangeur (10,11,12),
**caractérisé en ce que**
lesdits moyens pour régler le débit desdits gaz chauds à travers ledit échangeur (10,11) comprennent une branche de dérivation (17,23) desdits gaz chauds contournant ledit échangeur (10,11) et des moyens de répartition du débit desdits gaz chauds entre ladite branche de dérivation (17,23) et ledit échangeur (10,11).

9. Dispositif selon la revendication 8, **caractérisé en ce que** lesdits moyens de répartition du débit desdits gaz chauds entre ladite branche de dérivation (17,23) et ledit échangeur (10,11) comprennent une vanne à trois voies (18,24) connectée à une jonction entre ladite branche de dérivation (17,23) et une branche (16,22) du circuit desdits gaz chauds dans laquelle est inséré ledit échangeur.

10. Dispositif selon l'une quelconque des revendications 8 et 9, **caractérisé en ce que** ledit accessoire est un reformeur (15) fabriquant un combustible pour ladite pile à combustible (1) et/ou un compresseur (20) comprimant de l'air servant de comburant à ladite pile à combustible (1).

11. Dispositif selon la revendication 9, **caractérisé en ce que** lesdits moyens pour régler le débit dudit fluide caloporteur à travers ledit échangeur (12) comprennent une branche de dérivation (29) dudit fluide caloporteur contournant ledit échangeur (12) et des moyens de répartition du débit dudit fluide caloporteur entre ladite branche de dérivation (29) et ledit échangeur (12).

12. Dispositif selon la revendication 8, **caractérisé en ce que** lesdits moyens de répartition du débit dudit fluide caloporteur entre ladite branche de dérivation (29) et ledit échangeur (12) comprennent une vanne à trois voies (30) connectée à une jonction entre ladite branche de dérivation (29) et une branche (8) dudit circuit de refroidissement (4) dans laquelle est inséré ledit échangeur (12).

13. Dispositif selon l'une quelconque des revendications 11 et 12, **caractérisé en ce que** ledit accessoire est un brûleur (25) destiné à maintenir la température d'un reformeur (15) dans une plage de fonctionnement optimale dudit reformeur (15).

14. Dispositif selon l'une quelconque des revendications 9 et 12, **caractérisé en ce que** ladite vanne à trois voies (18,24,30) est réglable en continu.

## Patentansprüche

1. Verfahren zum Heizen der Fahrgastzelle (H) eines Kraftfahrzeuges (V), das mittels elektrischer Energie angetrieben wird, die von einer Brennstoffzelle (1) erzeugt wird, welche außerdem Wärmeenergie erzeugt, die über ein Wärme übertragendes Fluid selektiv entweder über einen Kühler (6) zur Umgebung des Fahrzeugs (V) hin evakuiert wird, oder über einen Lufterhitzer (9) zur Erwärmung der Fahrgastzelle (H) verwendet wird, wobei die Brennstoffzelle (1) mindestens mit einem Zubehör (15, 20, 25) versehen, ist, welches sie benötigt, um zu funktionieren, und welches warme Gase erzeugt, wobei das Verfahren darin besteht, selektiv Wärmeenergie von diesen warmen Gasen zu entnehmen, um sie an das Wärme übertragende Fluid zu übertragen, insbesondere in demjenigen Fall, in welchem die von der Brennstoffzelle (1) bereitgestellte Wärmeenergie unzureichend ist, um die Fahrgastzelle (H) auf die erwünschte Temperatur zu erwärmen,
**dadurch gekennzeichnet, dass** in dem Fall, in welchem die Eingangstemperatur (T_{Eingang}) im Lufterhitzer (9) des Wärme übertragenden Fluids geringer ist als eine Schwellentemperatur (T_{Schwelle}), selektiv die Wärmeenergie den warmen Gasen entnommen wird, um sie an das Wärme übertragende Fluid zu übertragen,

2. Verfahren nach Anspruch 1, **dadurch gekennzeichnet, dass**, wenn die Eingängstemperatur (T_{Eingang}) im Lufterhitzer (9) des Wärme übertragenden Fluids größer ist als die Schwellentemperatur (T_{Schwelle}), jegliche Warmeübertragungsbeziehung zwischen dem Wärme übertragenden Fluid und den warmen Gasen unterbunden wird.

3. Verfahren nach einem der Ansprüche 1 und 2, **dadurch gekennzeichnet, dass** es darin besteht, die Schwellentemperatur (T_{Schwelle}) variieren zu lassen, um so die Variationsgeschwindigkeit der Temperatur der Fahrgastzelle (H) variieren zu lassen.

4. Verfahren nach einem der vorhergehenden Ansprüche, **dadurch gekennzeichnet, dass** es darin besteht, gegebenenfalls die Entnahme der Wärmenergie durch Umleitung des Flusses des Wärme übertragenden Fluids weg vom Fluss der warmen Gase zu unterbrechen.

5. Verfahren nach Anspruch 4, **dadurch gekennzeichnet, dass** das Zubehör ein Brenner (25) ist, der dazu bestimmt ist, die Temperatur eines Reformers (15), der einen Brennstoff für die Brennstoffzelle (1) herstellt, in einem optimalen Betriebsbereich des Reformers (15) zu halten.

6. Verfahren nach einem der vorhergehenden Anspruche, **dadurch gekennzeichnet, dass** es darin besteht, gegebenenfalls die Entnahme der Wärmeenergie durch Umleitung des Flusses der warmen Gase weg vom Fluss des Wärme übertragenden Fluids zu unterbrechen.

7. Verfahren nach Anspruch 6, **dadurch gekennzeichnet, dass** das Zubehör ein Reformer (15) ist, der einen Brennstoff für die Brennstoffzelle (1) herstellt, und/oder ein Kompressor (20) ist, der die Luft vordichtet, welche der Brennstoffzelle (1) als Verbrennungsförderer dient.

8. Vorrichtung zum Beheizen der Fahrgastzelle (H) eines Kraftfahrzeuges (V), welches mittels elektrischer Energie angetrieben wird, die durch eine Brennstoffzelle (1) erzeugt wird, welche außerdem Wärmeenergie erzeugt, die über ein Wärme übertragendes Fluid, welches in einem Kühlkreis (4) der Brennstoffzelle (1) zum Zirkulieren gebracht wird, selektiv entweder über einen Kühler (6) in die Umgebung des Fahrzeugs (V) evakuuiert wird, oder verwendet wird, um über einen Lufterhitzer (9) die Falirgastzelle (H) zu heizen, wobei die Brennstoffzelle (1) mindestens mit einem Zubehör (15, 20, 25) versehen ist, welches sie benötigt, um zu funktionieren, und welches wanne Gase erzeugt, der Kühlkreis (4) umfasst wenigstens einen Tauscher (10,11,12), der mit wenigstens einem der Zubehöre (15, 20, 25) und Mitteln (18, 24, 30, 17, 23, 29) zur Regulierung des Durchsatzes der warmen Gase und/oder des Wärme übertragenden Fluids durch den Tauscher (10, 11, 12) in einer Wärmeübertragungsbeiziehung steht,
**dadurch gekennzeichnet, dass** die Mittel zur Regulierung des Durchsatzes der warmen Gase durch den Tauscher (10, 11) eine Abzweigung (17, 23) zur Ableitung der warmen Gase umfassen, die den Tauscher (10, 11) umgeht, und Mittel zur Verteilung des Durchsatzes der warmen Gase zwischen der Abzweigung zur Ableitung (17,23) und dem Tauscher (10, 11).

9. Vorrichtung nach Anspruch 8, **dadurch gekennzeichnet, dass** die Mittel zur Verteilung des Durchsatzes der warmen. Gase zwischen der Abzweigung zur Ableitung (17, 23) und dem Tauscher (10, 11) ein Dreiwegeventil (18, 24) umfassen, das an einer Verbindungsstelle zwischen der Abzweigung zur Ableitung (17, 23) und einem Zweig (16, 22) des Stromkreises der warmen Gase, in welchem der Tauscher eingefügt ist, angeschlossen ist.

10. Vorrichtung nach einem der Ansprüche 8 und 9, **dadurch gekennzeichnet, dass** das Zubehör ein Reformer (15) ist, der einen Brennstoff für die Brennstoffzelle (1) herstellt, und/oder ein Kompressor (20) ist, welcher Luft verdichtet, die der Brennstoffzelle (1) als Verbrennungsförderer dient.

11. Vorrichtung nach Anspruch 9, **dadurch gekennzeichnet, dass** die Mittel zur Regulierung des Durchsatzes des Wärme übertragenden Fluids durch den Tauscher (12) eine Abzweigung (29) zur Ableitung des Wärme übertragenden Fluids umfassen, welche den Tauscher (12) umgeht, und Mittel zur Verteilung des Durchsatzes des Wärme übertragenden Fluids zwischen der Abzweigung zur Ableitung (29) und dem Tauscher (12).

12. Vorrichtung nach Anspruch 8, **dadurch gekennzeichnet, dass** die Mittel zur Verteilung des Durchsatzes des Wärme übertragenden Fluids zwischen der Abzweigung zur Ableitung (29) und dem Tauscher (12) ein Dreiwegeventil (30) umfassen, welches an einer Verbindungsstelle zwischen der Abzweigung zur Ableitung (29) und einem Zweig (8) des Kühlkreises (4), in welchem der Tauscher (12) eingefügt ist, angeschlossen ist.

13. Vorrichtung nach einem der vorhergehenden Ansprüche 11 und 12, **dadurch gekennzeichnet, dass** das Zubehör ein Brenner (25) ist, der dazu bestimmt ist, die Temperatur eines Reformers (15) in einem optimalen Betriebsbereich des Reformers (15) zu halten.

14. Vorrichtung nach einem der Ansprüche 9 und 12, **dadurch gekennzeichnet, dass** das Dreiwegeventil (18,24, 30) kontinuierlich verstellbar ist.

## Claims

1. A method of heating the passenger space (H) of an automobile vehicle (V) driven by means of electrical energy generated by a fuel cell (1) also generating heat energy which, by means of a heat exchanging fluid, is selectively discharged either outside the vehicle (V) by means of a radiator (6) or is used to heat the passenger space (H) by means of a unit heater (9), the fuel cell (1) being provided with at least one accessory (15, 20, 25) which it needs to function and which generates hot gases, the method consisting in selectively taking the heat energy from the hot gases in order to transfer it to the heat exchanging fluid, especially in the case in which the heat energy generated by the fuel cell (1) is not enough to heat the passenger space (H) to the desired temperature, **characterised in that** the heat energy is selectively taken from the hot gases to transfer it to the heat exchanging fluid in the case in which the temperature (Tᵢₙₚᵤₜ) at which the heat exchanging fluid is input into the unit heater (9) is below a threshold temperature (T_{threshold}).

2. A method as claimed in claim 1, **characterised in that** when the temperature (Tᵢₙₚᵤₜ) at which the heat exchanging fluid is input into the unit heater (9) is higher than the threshold temperature (T_{threshold}), any heat transfer relationship between the heat exchanging fluid and the hot gases is eliminated.

3. A method as claimed in any one of claims 1 and 2, charactensed in that it consists in varying the threshold temperature (T_{threshold}) in order to cause the variation of the speed of variation of the temperature of the passenger space (H).

4. A method as claimed in any one of the preceding claims, **characterised in that** it consists, where appropriate, in discontinuing the take-up of the heat energy by diverting the flow of the heat exchanging fluid from the flow of hot gases.

5. A method as claimed in claim 4, **characterised in that** the accessory is a burner (25) adapted to maintain the temperature of a reformer (15) producing a fuel for the fuel cell (1) in an optimum operating range of the reformer (15).

6. A method as claimed in any one of the preceding claims, **characterised in that** it consists, where appropriate, in discontinuing the take-up of the heat energy by diverting the flow of hot gases from the flow of the heat exchanging fluid.

7. A method as claimed in claim 6, **characterised in that** the accessory is a reformer (15) producing a fuel for the fuel cell (1) and/or a compressor (20) compressing the air acting as an oxidant for the fuel cell (1).

8. A heating device for the passenger space (H) of an automobile vehicle (V) driven by means of electrical energy generated by a fuel cell (1) also generating heat energy which, by means of a heat exchanging fluid caused to circulate in a cooling circuit (4) of the fuel cell (1), is selectively either discharged outside the vehicle (V) by means of a radiator (6) or used to heat the passenger space (H) by means of a unit heater (9), the fuel cell (1) being provided with at least one accessory (15, 20, 25) which it needs to function, and which generates hot gases, the cooling circuit (4) comprises at least one exchanger (10,11,12) in a heat transfer relationship with at least one of the accessories (15, 20, 25) and means (18, 24, 30, 17, 23, 29) for regulating the rates of flow of the hot gases and/or of the heat exchanging fluid through the exchanger (10, 11, 12), **characterised in that** the means for regulating the flow of hot gases through the exchanger (10, 11) comprise a branch duct (17, 23) of the hot gases circumventing the exchanger (10, 11) and means for dividing the flow of hot gases between the branch duct (17, 23) and the exchanger (10,11).

9. A device as claimed in claim 8, **characterised in that** the means for dividing the flow of hot gases between the branch duct (17, 23) and the exchanger (10, 11) comprise a three-way valve (18, 24) connected to a junction between the branch duct (17, 23) and a branch (16, 22) of the circuit of hot gases in which the exchanger is inserted.

10. A device as claimed in any one of claims 8 and 9, **characterised in that** the accessory is a reformer (15) producing a fuel, for the fuel cell (1) and/or a compressor (20) compressing the air serving as an oxidant for the fuel cell (1),

11. A device as claimed in claim 8, **characterised in that** the means for regulating the flow of the heat exchanging fluid through the exchanger (12) comprise a branch duct (29) of the heat exchanging fluid circumventing the exchanger (12) and means for dividing the flow of the heat exchanging fluid between the branch duct (29) and the exchanger (12).

12. A device as clamed in claim 8, **characterised in that** the means for dividing the flow of the heat exchanging fluid between the branch duct (29) and the exchanger (12) comprise a three-way valve (30) connected to a junction between the branch duct (29) and a branch (8) of the cooling circuit (4) in which the exchanger (12) is inserted.

13. A device as claimed in any one of claims 11 and 12, **characterised in that** the accessory is a burner (25) adapted to maintain the temperature of a reformer (15) man optimum operating range of the reformer (15).

14. A device as claimed an any one of claims 9 and 12, **characterised in that** the three-way valve (18,24,30) may be continuously regulated.
